# EUROPEAN PATENT SPECIFICATION

(11) **EP 3 680 703 B1**
(45) Date of publication and mention of the grant of the patent: **17.07.2024**
(21) Application number: 20150361.2
(22) Date of filing: 06.01.2020
(51) Int. Cl.: G02B 27/09, G02B 5/02, A01G 9/24, A01G 7/04

(54) **SYSTEM AND METHOD OF MAGNIFYING SPATIAL COHERENT LIGHT THROUGH AN OPTICAL DIFFUSER**
SYSTEM UND VERFAHREN ZUR VERGRÖSSERUNG VON RÄUMLICHEM KOHÄRENTEM LICHT DURCH EINEN OPTISCHEN DIFFUSOR
SYSTÈME ET PROCÉDÉ D'AGRANDISSEMENT DE LUMIÈRE COHÉRENTE SPATIALE PAR L'INTERMÉDIAIRE D'UN DIFFUSEUR OPTIQUE

(30) Priority: 13.01.2019 US 201916246523
(43) Date of publication of application: 15.07.2020
(73) Proprietor: Redpath, Richard, Cary, NC 27513 (US)
(72) Inventor: Redpath, Richard, Cary, North Carolina 27513 (US)
(74) Representative: Loo, Chi Ching

(56) References cited:
- US-A1- 2011 013 145
- US-A1- 2011 199 686
- US-A1- 2016 088 804
- US-A1- 2019 200 536
- US-B1- 9 683 730

## Description

### FIELD OF THE INVENTION

The present invention relates generally to a laser beam through an optical diffuser that spreads out the beam for high spatial coherence, more particularly a device that increases the amount of spatial coherent light from a laser beam for horticulture. A user of the present invention will be able to manufacture a device which first spreads out a laser beam of coherent light with a diffuser, and then reflects the light that is generated by the internal reflections and refractions of the diffuser traveling along suboptimal trajectories back such that the amount of spatial coherent light toward target horticulture is magnified.

The apparatus is designed to maximize the amount of spatial coherence of light directed along a desired trajectory by an optical diffuser. The light optimization device contains a laser, a mirror with hole, and an optical diffuser against the mirror. The aperture enables light to travel through the mirror to the optical diffuser. The mirror reflects light that is internally reflected and refracted back from the optical diffuser traveling along suboptimal trajectories. As such, the reflected light is redirected towards the optical diffuser for increased spatial coherence output directed along a desired trajectory forward.

### BACKGROUND OF THE INVENTION

Spatial coherence is a strong correlation (fixed phase relationship) between the electric fields at different locations across the beam profile. For example, within a cross-section of a beam from a laser with diffraction-limited beam quality, the electric fields at different positions oscillate in a totally correlated way, even if the temporal structure is complicated by a superposition of different frequency components. Spatial coherence is the essential prerequisite for transmission holograms which can only be viewed by coherent light such as produced by a laser. The preservation of this coherent light is intended for advance plant growth (e.g., horticulture). To illuminate horticulture with coherent light an optical diffuser is deployed rather than a refractive lens system that would create an unwanted and potentially damaging burn area near the lens system.

Although this method of spreading a laser beam for illumination produces spread light with desired properties of spatial coherence, a significant amount of the light is lost. This loss is due to the fact that a portion of the light is internally reflected back and internally refracted back out of the diffusion material. This practice wastes energy and costs more for a return on the investment for a horticulture system to produce product.

Therefore, the object of the present invention is to employ a mirror to redirect light which would otherwise be lost. The present invention uses an arrangement of components that enable a laser beam to pass through a hole in a mirror to the optical diffuser. Once the beam enters the optical diffuser a portion of the light is directed backwards by the diffuser through internal reflection and refraction. However, because of the mirror the light which would normally be lost is directed back towards the optical diffuser. Using the diffuser to spread the source light, and the mirror to redirect wasted back light, increases the efficiency for the present invention to produce spatial coherence in a safe manner. Prior art of a system used for perceived white light is US9,683,730 B1 "System and Method of Optimizing White Light" which uses a laser beam, diffuser, and modifying substrate to be excited to produce white light. This prior art system is edited to remove the modifying substrate and discovery was shown that the amount of light is increased with preservation of spatial coherence for a brighter transmission hologram thereby demonstrating more coherent light is available for horticulture use. US 2011/199686 A1 discloses a light diffusion cell for laser light. US 2019/200536 A1 discloses a method for efficient use of light energy to advance plant growth. US2016/088804 A1 discloses a laser-based agriculture system US2011/0013145 A1 discloses the use of a laser beam to avoid speckle noise when a laser is used as the light source for a projector.

In accordance with an aspect of the present invention, there is provided a method according to independent claim 1.

The coherent light beam may preferably be a laser beam; an emission axis of the coherent light beam may be collinearly aligned with the transmission hole; and the emission axis of the coherent light beam may be oriented towards the optical diffuser.

In another aspect of the present invention, there is provided an optical assembly for magnifying spatial coherent light as claimed in claim 3.

### BRIEF DESCRIPTION OF THE DRAWINGS

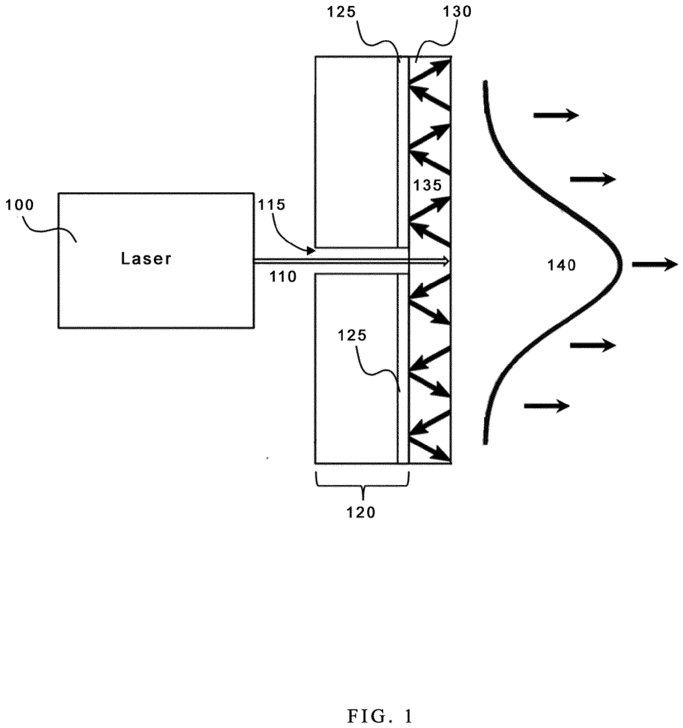

FIG. 1 is a schematic view of the present invention. Light being generated by the light source passes through the transmission hole, is refracted by the optical diffuser for exit as a Gaussian distribution. A portion of the light is directed back towards the mirror surface and is then redirected towards the optical diffuser.

### DETAIL DESCRIPTIONS OF THE INVENTION

All illustrations of the drawings are for the purpose of describing selected versions of the present invention and are not intended to limit the scope of the present invention, as defined by the claims.

In reference to Figure 1 at 100 is a laser which produces a beam at 110 that traverse a hole at 115 through a mirror at 120 with mirror surface at 125 facing an optical diffuser at 130. The laser beam at 110 impacts the diffuser at 130 and produces light output at 140. At 130 the diffuser has internal reflections and refractions at 135 back to the mirror at 125 which reflects light back through the diffuser at 130.

The light output 140 may be a Gaussian light output or other light output.

## Claims

1. A method of magnifying spatial coherent light through an optical diffuser comprises:
providing a coherent light beam (110) through a transmission hole (115) of a mirror (120), the mirror (120) having a mirror surface (125) at its rear;
the coherent light beam (110) impacting the optical diffuser (130), a first side of the optical diffuser (130) being in contact with the mirror surface (125), wherein magnified light (140) is outputted from a second side of the optical diffuser (130) which opposes the first side of the optical diffuser (130),
**characterised in that**
the outputted magnified light is magnified spatial coherent light (140).

2. The method of magnifying spatial coherent light through an optical diffuser as claimed in claim 1, wherein:
the coherent light beam is a laser beam (110);
an emission axis of the coherent light beam (110) being collinearly aligned with the transmission hole (115); and
the emission axis of the coherent light beam (110) being oriented towards the optical diffuser (130).

3. An optical assembly for magnifying spatial coherent light, comprising:
a coherent light source (100) for providing a coherent light beam (110);
a mirror (120) having a mirror surface (125) at its rear; and
an optical diffuser (130) having a first side in contact with the mirror surface (125);
wherein
a transmission hole (115) is provided through the mirror (120) for allowing transmission of the coherent light beam (110) through the mirror (120) to the optical diffuser (130);
wherein the optical diffuser (130) has a second side opposite said first side;
**characterised in that**
magnified spatial coherent light (140) is output from the second side when the coherent light beam (110) is transmitted through the transmission hole (115) to the optical diffuser (130).

4. An optical assembly as claimed in claim 3, wherein the coherent light source (100) is a laser source; and is positioned at a front of the mirror (120) such that an emission axis of the coherent light source (100) is collinearly aligned with the transmission hole (115).

## Patentansprüche

1. Verfahren zur Vergrößerung von räumlichem kohärentem Licht durch einen optischen Diffusor, das umfasst:
Bereitstellen eines kohärenten Lichtstrahls (110) durch ein Übertragungsloch (115) eines Spiegels (120), wobei der Spiegel (120) eine Spiegelfläche (125) an seiner Rückseite aufweist;
wobei der kohärente Lichtstrahl (110) auf den optischen Diffusor (130) auftrifft, wobei eine erste Seite des optischen Diffusors (130) in Kontakt mit der Spiegelfläche (125) ist, wobei vergrößertes Licht (140) aus einer zweiten Seite des optischen Diffusors (130), die entgegengesetzt zu der ersten Seite des optischen Diffusors (130) ist,
**dadurch gekennzeichnet, dass** das ausgegebene vergrößerte Licht vergrößertes räumliches kohärentes Licht (140) ist.

2. Verfahren zur Vergrößerung von räumlichem kohärentem Licht durch einen optischen Diffusor nach Anspruch 1, wobei:
der kohärente Lichtstrahl ein Laserstrahl (110) ist;
eine Emissionsachse des kohärenten Lichtstrahls (110) kollinear an das Übertragungsloch (115) angeglichen ist; und
eine Emissionsachse des kohärenten Lichtstrahls (110) zu dem optischen Diffusor (130) hin ausgerichtet ist.

3. Optische Anordnung zur Vergrößerung von räumlichem kohärentem Licht, umfassend:
eine Quelle (100) für kohärentes Licht zum Bereitstellen eines kohärenten Lichtstrahls (110);
einen Spiegel (120), der eine Spiegelfläche (125) an seiner Rückseite aufweist; und
einen optischen Diffusor (130), der eine erste Seite in Kontakt mit der Spiegelfläche (125) aufweist; wobei
ein Übertragungsloch (115) durch den Spiegel (120) zum Ermöglichen einer Übertragung des kohärenten Lichtstrahls (110) durch den Spiegel (120) an den optischen Diffusor (130) vorgesehen ist; wobei
der optische Diffusor (130) eine zweite Seite entgegengesetzt zu der ersten Seite aufweist;
**dadurch gekennzeichnet, dass** vergrößertes räumliches kohärentes Licht (140) aus der zweiten Seite ausgegeben wird, wenn der kohärente Lichtstrahl (110) durch das Übertragungsloch (115) an den optischen Diffusor (130) übertragen wird.

4. Optische Anordnung nach Anspruch 3, wobei die Quelle (100) für kohärentes Licht eine Laserquelle ist und an einer Vorderseite des Spiegels (120) positioniert ist, so dass eine Emissionsachse der Quelle (100) für kohärentes Licht kollinear an das Übertragungsloch (115) angeglichen ist.

## Revendications

1. Un procédé de grossissement d'une lumière spatiale cohérente à travers un diffuseur optique comprend :
fournir un faisceau lumineux cohérent (110) à travers un trou de transmission (115) d'un miroir (120), le miroir (120) ayant une surface de miroir (125) à son arrière ;
le faisceau lumineux cohérent (110) impactant le diffuseur optique (130), un premier côté du diffuseur optique (130) étant en contact avec la surface du miroir (125), dans laquelle une lumière magnifiée (140) est émise depuis un second côté du diffuseur optique (130) qui est opposé au premier côté du diffuseur optique (130) **caractérisé en ce que** la lumière magnifiée émise est une lumière spatiale cohérente amplifiée (140).

2. Le procédé de grossissement d'une lumière spatiale cohérente à travers un diffuseur optique selon la revendication 1, dans lequel :
le faisceau lumineux cohérent est un faisceau laser (110) ;
un axe d'émission du faisceau lumineux cohérent (110) étant aligné de manière colinéaire avec le trou de transmission (115) ; et l'axe d'émission du faisceau lumineux cohérent (110) étant orienté vers le diffuseur optique (130).

3. Un ensemble optique pour magnifier une lumière spatiale cohérente, comprenant :
une source de lumière cohérente (100) pour fournir un faisceau lumineux cohérent (110) ;
un miroir (120) ayant une surface de miroir (125) à l'arrière ; et
un diffuseur optique (130) ayant un premier côté en contact avec la surface du miroir (125) ; dans lequel
un trou de transmission (115) est prévu à travers le miroir (120) pour permettre la transmission du faisceau de lumière cohérente (110) à travers le miroir (120) vers le diffuseur optique (130) ; dans lequel
le diffuseur optique (130) a un second côté opposé audit premier côté; **caractérisé en ce que** une lumière cohérente spatiale magnifiée (140) est émise depuis le second côté lorsque le faisceau de lumière cohérente (110) est transmis à travers le trou de transmission (115) vers le diffuseur optique (130).

4. Un ensemble optique selon la revendication 3, dans lequel la source de lumière cohérente (100) est une source laser ; et est positionnée à l'avant du miroir (120) de telle sorte qu'un axe d'émission de la source de lumière cohérente (100) soit aligné de manière colinéaire avec le trou de transmission (1 15).
